# EUROPÄISCHE PATENTSCHRIFT

(11) **EP 1 855 903 B1**
(45) Veröffentlichungstag und Bekanntmachung des Hinweises auf die Patenterteilung: **12.06.2013**
(21) Anmeldenummer: 06703919.8
(22) Anmeldetag: 16.01.2006
(51) Int. Cl.: B60K 11/08, F01P 11/10

(54) **VORRICHTUNG ZUR BEEINFLUSSUNG EINES LUFTSTROMS**
DEVICE FOR INFLUENCING AN AIR FLOW
DISPOSITIF SERVANT A INFLUER SUR UN COURANT D'AIR

(30) Priorität: 25.02.2005 DE 102005009203
(43) Veröffentlichungstag der Anmeldung: 21.11.2007
(73) Patentinhaber: Behr GmbH & Co. KG, 70469 Stuttgart (DE)
(72) Erfinder: HARICH, Martin, 71638 Ludwigsburg (DE); KÄMMLER, Georg, 70439 Stuttgart (DE); VOLLERT, Ulrich, 70567 Stuttgart (DE)
(74) Vertreter: Grauel, Andreas
(86) Internationale Anmeldenummer: PCT/EP2006/000308
(87) Internationale Veröffentlichungsnummer: WO 2006/089598

(56) Entgegenhaltungen:
- DE-A1- 10 257 838
- US-A- 2 205 661

## Beschreibung

Die Erfindung betrifft eine Vorrichtung zur Beeinflussung bzw. zur Regulierung eines Luftstroms sowie ein Verfahren zur Herstellung einer solchen Vorrichtung.

Bei Kraftfahrzeugen ist die Verwendung von Staudruckklappen in Luftdurchtritten bekannt. Unter Staudruckklappen versteht man dabei allgemein den Luftdurchtritt begrenzende oder verschließende Klappen, die bei Vorliegen einer Luftdruckdifferenz Öffnen. Die Luftdruckdifferenz kann durch Fahrtwind entstehen. Im allgemeinen werden im modernen Fahrzeugbau Klappen verwendet, die in sich steif und einzeln in einer jeweiligen Gelenkmechanik, in der Regel einem Drehgelenk, schwenkbar aufgenommen sind. Hierdurch entstehen Kosten und Zeitaufwand bei der Herstellung entsprechender mit Staudruckklappen versehener Lüfterhauben. Zudem sind die Gelenkmechaniken anfällig gegen Verschmutzungen und Verschleiß. Ferner ist der Öffnungswiderstand solcher Klappen meist hoch und über die Lebensdauer nicht konstant.

In der DE 102 57 838 A1, die als Ausgangspunkt der vorliegenden Erfindung betrachtet werden kann, ist ein Belüftungsmodul für einen Kühler einer Brennkraftmaschine beschrieben, das eine Platte mit einer Luftdurchtrittsöffnung und einer der Luftdurchtrittsöffnung zugeordneten Luftklappe aufweist. Die Luftklappe ist aus der Platte ausgeformt, wobei ihre Schwenkbarkeit durch federelastische Ausbildung eines angrenzenden Plattenabschnitts herbeigeführt wird. Die DE 102 57 837 zeigt kein flexibles Flügelelement.

US 2,205,661 beschreibt eine Abdeckung für einen Wärmetauscher für ein Kraftfahrzeug, die im wesentlichen aus einem Gummimaterial hergestellt und mittels einstückig daran ausgebildeten Verbindungsfingem zwischen Stege des Wärmetauschers einsteckbar ist. Die Abdeckung umfaßt dabei eine Anzahl von Gummiklappen, die durch den Fahrtwind elastisch in eine Offnungsrichtung verbogen werden können.

Es ist die Aufgabe der Erfindung, eine Vorrichtung zur Beeinflussung bzw. Regulierung eines Luftstroms für ein Kraftfahrzeug zu schaffen, die kostengünstig herstellbar und bei geringer Anfälligkeit gegen Verschmutzungen eine hohe Langlebigkeit aufweist Es ist zudem die Aufgabe der Erfindung, ein Verfahren zur Herstellung einer solchen Vorrichtung anzugeben.

Diese Aufgabe wird durch eine Vorrichtung erfindungsgemäß mit den Merkmalen des Anspruchs 1 gelöst.

Durch die Kombination von Tragelement und Folienelement in Verbindung mit einer flächigen Anlage der beiden kann kostengünstig eine Abdeckung ausgebildet werden, die gleich mehrere Klappenelemente aufweist, die zudem durch Ausbildung mittels der Folie leichtgängig, relativ unempfindlich gegen Verschmutzungen, langlebig sind und ein relativ geringes Gewicht haben. Weitere Vorteile liegen in einer Kostenreduzierung durch verringerten Montageaufwand und Materialersparnis. Gegenüber vergleichbaren mechanischen Klappen ist eine verbesserte Kühlleistung durch bessere Abdichtung der Klappen, leichteres Öffnen sowie vielseitigere geometrische Anpassung erzielbar. Durch die Art der Vorrichtung ist zudem eine stärker automatisierte Fertigung möglich, so daß eine gleichbleibende und bessere Qualität möglich ist Ferner werden Klappergeräusche gegenüber Klappen mit mechanischem Gelenk, wie sie etwa beim Schließen von Fahrzeugtüren auftreten können, verringert.

Bevorzugt besteht das Folienelement aus einem Kunststoff, insbesondere teilaromatischen Polyamid, Polytetrafluorethylen (PTFE), Perfluoralkoxy-Copolymerisat (PFA), PVC, Polypropylen (PP) oder Polyimid (PI), oder aus mehrschichtige Folien mit vorzugsweise zumindest einem der obigen Materialien, aus Elastomer, oder Gewebe oder beschichtetem Gewebe oder aus einer orientierten (gereckten) Folie. Durch die genannten Materialien sind hohe Lebensdauern und geringe Anfälligkeit gegen Abrieb erzielbar. Besonders bevorzugt besteht das Tragelement ebenfalls aus einem Kunststoff, insbesondere durch Zusatzstoffe verstärktes Polypropylen (PP) oder Polyamid 66 (PA66), wodurch eine leichte Bauweise und einfache Herstellung der Vorrichtung ermöglicht ist.

Vorteilhaft sind die Klappenelemente mit einer Verstärkung aus dem Material des Tragelements hinterlegt. Weiterhin vorteilhaft ist es, wenn die Folie sich im geschlossenen Zustand an einem Gitter abstützt, das die Öffnungen im Tragelement überspannt. Dies ermöglicht bei einfacher Herstellung eine besonders dünne Ausbildung der Folie, so daß der Widerstand eines durch die Folie ausgebildeten Folienschamiers besonders gering ist.

Bevorzugt ist durch die Vorrichtung eine Lüfterhaube zur Aufnahme eines Lüfters in gegenüber einem Wärmetauscher saugender Anordnung ausgebildet, wobei ein Saugbetrieb des Lüfters eine in Schließrichtung der Klappen wirkende Druckdifferenz bewirkt und wobei ein geschwindigkeitsbedingter Fahrtwind eine in Öffnungsrichtung der Klappen wirkende Druckdifferenz bewirkt. Hierdurch kann sowohl eine leichtgängige Öffnung der Klappenelemente als auch deren gute Dichtigkeit bei Druckbelastung in Schließrichtung zur Verbesserung bekannter Vorrichtungen genutzt werden.

In vorteilhafter Ausführung kann das Folienelement mittels einer haftvermittelnden Zwischenschicht, insbesondere einem Klebstoff, mit dem Tragelement verbunden sein, wodurch eine einfache Herstellung ermöglicht ist. Altemativ oder ergänzend hierzu kann auch das Folienelement Durchbrechungen aufweisen, durch die Teile des Tragelements den Folienwerkstoff zum Zwecke der Festlegung durchgreifen. Hierdurch ist eine besonders sichere formschlüssige oder hinterschneidende Festlegung von Folienelement und Tragelement ermöglicht.Wiederum alternativ oder ergänzend hierzu kann im Bereich ihrer flächigen Anlage eine haftende unmittelbare Verbindung der Materialien von Folienelement und Tragelement vorliegen, was zwar zumeist eine spezielle Herstellung erfordert, jedoch eine besonders zuverlässige und sichere Verbindung der Elemente gewährleistet. Eine solche unmittelbare Verbindung ist etwa durch Aufspritzen des Tragelements auf die Folie erzielbar. Um Bereiche einer gegenseitigen Festlegung zugleich mit Bereichen einer Nichthaftung zu erzielen, kann dabei eine lokale Vorbehandlung der Oberfläche zumindest eines des Elemente erfolgen. Die vorbehandelten Stellen können dann, je nach Anforderung, Material und Art der Vorbehandlung, haftend oder nicht haftend sein. Dabei ist weiterhin vorteilhaft, wenn eine haftende Zwischenschicht verwendet wird, die nach Vorbehandlung haftend sind oder nicht haftend sind.

In bevorzugter Ausführung einer erfindungsgemäßen Vorrichtung weisen zumindest zwei Klappenelemente eine unterschiedliche Größe auf, wobei ein an dem einen Klappenelement auftretender Staudruck ebenfalls eine unterschiedliche Größe aufweist als ein zugleich an dem anderen Klappenelement auftretender Staudruck.

Durch die Anpassung der einzelnen Klappenelemente in ihrer Größe und Form an eine räumliche Staudruckverteilung, wie etwa zwischen einem Wärmetauscher und einer Lüfterhaube, ist eine weitere Optimierung des Luftdurchsatzes möglich, da ein früheres Öffnen der jeweiligen Klappe erzielt wird.

Die Aufgabe wird durch ein erfindungsgemäßes Verfahren mit den Merkmalen des Anspruchs 20 gelöst.

In vorteilhafter Ausgestaltung des Verfahrens wird vor der Verbindung von Folienelement und Tragelement ein Klebstoff auf zumindest eines der beiden, Folienelement oder Tragelement, aufgebracht Dies ermöglicht eine manuelle oder automatisierte Fertigung, die sich auch bei kleineren Stückzahlen rechnet.

Besonders bevorzugt wird vor der Verbindung von Folienelement und Tragelement eine zumindest teilweise Oberflächenbehandlung, insbesondere eine Plasmabehandlung, zumindest eines der beiden, Folienelement oder Tragelement, durchgeführt. Vorteithjaft ist hierbei dioe Plasmabehandlung, wenn das zu behandelnde Teil, vorzugsweise die Folie, vor dem Hinterspritzen behandelt wird. Hierdurch läßt sich eine unmittelbare Verbindung, im Idealfall unter molekularer Vernetzung der beiden häufig aus verschiedenen Kunststoffen bestehenden Elemente, erzielen. Alternativ oder ergänzend dazu kann vor der Verbindung das Folienelement und/oder das Tragelement zumindest lokal mit einer Anti-Haftschicht versehen werden; dies ist besonders dann von Interesse, wenn die beiden Materialien ohnehin aneinander haften oder eine Verbindung eingehen würden. Ganz allgemein kann hierdurch aber eine wohldefinierte Trennung von Bereichen der Elemente gewährleistet werden, die nach der Herstellung voneinander gelöst vorliegen sollen.

In einer besonders bevorzugten Ausführung des erfindungsgemäßen Verfahrens wird das Tragelement nach Einlegen des Folienelements in eine Spritzform auf das Folienelement aufgespritzt. Hierdurch ist die Vorrichtung kostengünstig, in hohen Stückzahlen und bei sehr gleichbleibender Qualität hersteilbar.

Vorteilhaft werden dabei Verstärkungen der Klappenelemente durch Anspritzen mittels Spritzkanälen nach Art eines Tunnelangusses ausgebildet, so daß auch bei einer großen Anzahl von Klappenelementen kein zusätzlicher Aufwand bei deren Ausbildung entsteht.

In einer weiterhin bevorzugten Ausführung wird die Folientrennung durch eine in der Spritzform ausgebildete Scherkante in dem Folienelement eingebracht, so daß auf einfache Weise ein durch Einspritzen des Tragelement auf das Folienelement aufgebauter Druck zu dessen Stanzung bzw. Einschneidung fahrt.

Alternativ dazu kann die Folientrennung durch ein Scherwerkzeug nach dem Aufspritzen des Tragelements ausgebildet werden. Wiederum alternativ können die Klappenelemente durch Bearbeitung mit einem Laserstrahl nach dem Aufspritzen des Tragelements ausgebildet werden. Die Wahl der Methode der Ausbildung der Klappenelemente hängt dabei ganz von Materialart und Materialdicke sowie weiteren Anforderungen ab.

Je nach Anforderungen kann die Folientrennung auch vor einer Verbindung mit dem Tragelement in dem Folienelement eingebracht werden, insbesondere mittels Stanzung. Dies bietet sich besonders dann an, wenn das Tragelement nicht aufgespritzt, sondern die beiden Elemente etwa mittels Klebung verbunden werden.

Weitere Vorteile und Merkmale ergeben sich aus den abhängigen Ansprüchen sowie aus den nachfolgend beschriebenen Ausführungsbeispielen.

Nachfolgend wird ein bevorzugtes Ausführungsbeispiel einer erfindungsgemäßen Vorrichtung mit zwei abgewandelten Ausführungen hinsichtlich des Herstellungsverfahrens beschrieben und anhand der anliegenden Zeichnungen näher erläutert.
Fig. 1 zeigt eine Ansicht von hinten bzw. in Fahrtrichtung auf eine Lüfterhaube mit Lüfter und erfindungsgemäßer Vorrichtung, wobei die rechte Hälfte eine Anordnung gemäß Stand der Technik zeigt und die linke obere Hälfte sowie die linke untere Hälfte jeweils Abwandlungen der erfindungsgemäßen Vorrichtung zeigen.
Fig. 2 zeigt ein Klappenelement einer erfindungsgemäßen Vorrichtung in einem annähernd geschlossenen, einem halboffenen und einem vollständig geöffneten Zustand.
Fig. 3 zeigt eine erfindungsgemäße Vorrichtung in einer Spritzform zur Verdeutlichung einer ersten Ausführung eines erfindungsgemäßen Herstellungverfahrens.
Fig. 4 zeigt eine erfindungsgemäße Vorrichtung in einer Spritzform zur Verdeutlichung einer zweiten Ausführung eines erfindungsgemäßen Herstellungverfahrens.
Fig. 5 zeigt die Vorrichtung aus Fig. 4 bei Öffnung der Spritzform nach dem Guß.
Fig. 6 zeigt ein Diagramm zur Veranschaulichung des durch eine erfindungsgemäße Vorrichtung verbesserten Luftdurchsatzes in Abhängigkeit von der Fahrgeschwindigkeit.

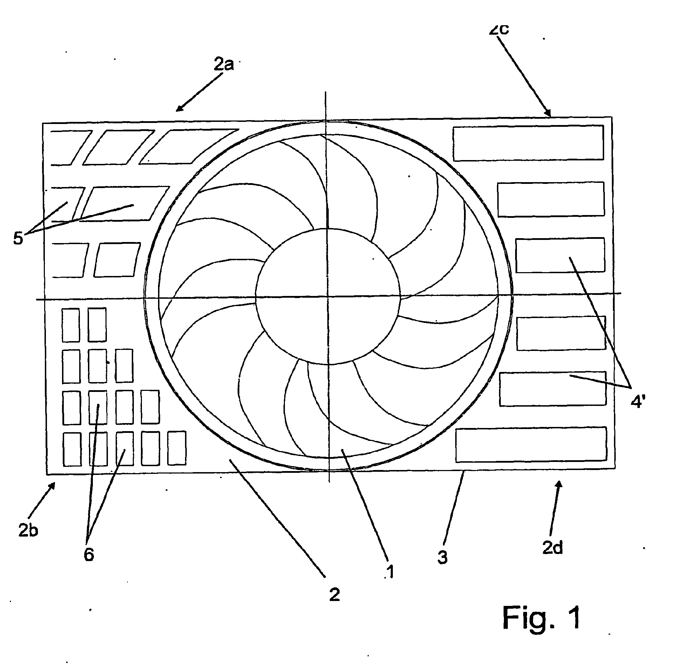

Die in Fig. 1 gezeigte Vorrichtung umfaßt einen elektrischen Lüfter 1, der im Saugbetrieb in Fahrtrichtung vor einem nicht sichtbaren Wärmetauscher angeordnet ist. Der Lüfter 1 ist in einer Lüfterhaube 2 aufgenommen, die entlang ihrer Ränder 3 luftdicht mit dem Wärmetauscher verbunden ist. Diese Verbindung kann unmittelbar oder mittels Zwischenrahmen oder anderen Mitteln erfolgen.

Die gezeigte Lüfterhaube 2 weist aus Gründen der einfachen Darstellung vier Sektoren 2a, 2b, 2c, 2d auf, die jeweils etwa einem Viertel der Lüfterhaube entsprechen. Die rechten Sektoren 2c, 2d sind dabei gleichartig und zeigen schematisch längliche, rechteckige und relativ großflächige Klappenelemente bzw. Staudruckklappen 4'. Diese Staudruckklappen 4' entsprechen dem Stand der Technik und sind als Klappen mit mechanischem Gelenk ausgebildet. Diese Darstellung des Standes der Technik macht anschaulich, daß, zumindest ohne übermäßigen Aufwand zu treiben, herkömmliche mechanische Klappen 4' gering an der Zahl, jeweils zumeist rechteckig sind.

Die Staudruckklappen 5, 6 des Sektors 2a (links oben) sowie des Sektors 2b (links unten) sind jeweils Abwandlungen von Staudruckklappen gemäß der vorliegenden Erfindung.

Die Klappenelemente 5 des Sektors 2a weisen jeweils zumindest zwei nicht parallele gegenüberliegende Seiten auf, wobei einige der Seiten sogar gekrümmt sind. Klappenelemente 5, die näher an dem Lüfter 1 liegen, sind größter als solche, die im Randbereich liegen. Diese Verteilung und Formgebung ist nicht willkürlich, sondern an eine durch Fahrtwind bedingte räumliche Staudruckverteilung zwischen Wärmetauscher und Lüfterhaube angepasst. Durch diese Anpassung öffnen die einzelne der Klappen früher als andere Klappen, so daß ein verbesserter Luftdurchsatz auch bei geringen Geschwindigkeiten erzielt wird. Somit können sich Fahrtzustände einstellen, bei welchen der Lüfter leistungsreduziert laufen kann , so daß durch die Anordnung auch Energie gespart werden.

Eine andere Anordnung ist im Sektor 2b gezeigt. Die dortigen erfindungsgemäßen Klappenelemente 6 sind jeweils rechteckig und sehr klein, wobei sie zur Erzielung eines guten Luftdurchsatzes in großer Anzahl vorliegen. Dies verdeutlicht die hohe Flexibilität der erfindungsgemäßen Vorrichtung, da es keine nennenswerten Unterschiede an Kosten und Aufwand ausmacht, in welcher Zahl, Größe oder Form die Klappenelemente vorliegen.

Sämtliche der in Fig. 1 gezeigten Staudruckklappen werden durch den aus der Zeichnungsebene austretenden Fahrtwind geöffnet, während der Betrieb des Lüfters bei Fahrzeugstillstand oder geringen Geschwindigkeiten einen emiedrigten Luftdruck zwischen Lüfterhaube 2 und Wärmetauscher bewirkt (Saugbetrieb), so daß in diesem Fall die Staudruckklappen in Schließrichtung kraftbeaufschlagt sind.

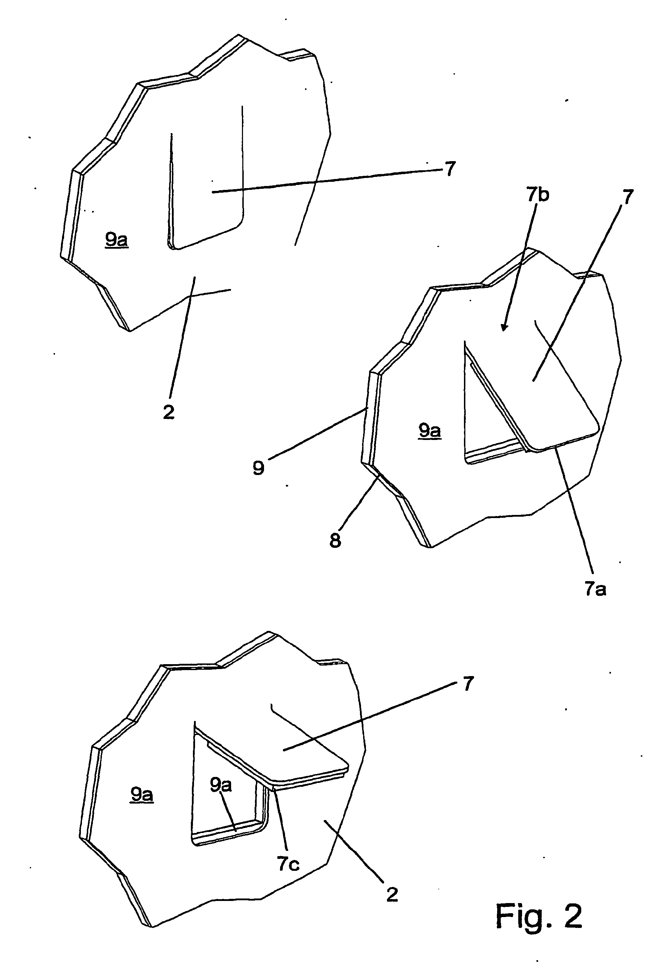

Die Darstellung in Fig. 2 zeigt einen Ausschnitt aus der Lüfterhaube 2 der Fig. 1 mit einem einzelnen erfindungsgemäßen Klappenelement 7 in verschiedenen Stellungen. Die Vorrichtung umfaßt ein Folienelement 8 und ein Tragelement 9, welche in großen Bereichen 9a flächig aneinander anliegen, insbesondere aneinander haften. Das Klappenelement 7 hat einen Klappenrand 7a, der als eine Durchschneidung oder Durchgreifung des Follenelementes 8 ausgebildet ist. Der Klappenrand 7a umläuft das im wesentlichen rechteckige Klappenelement 7a nur auf drei Seiten. Die vierte Seite ist nicht durchschnitten, so daß die Folie dort ein Filmscharnier 7b zum Bewegen der Klappe ausbildet. Zweckmäßig kann die Folie an dieser Stelle auch geschwächt sein, etwa durch Einschnitt oder Prägung.

Das Klappenelement 7 weist hinter der Folie eine Verstärkung 7c auf, die zweckmäßig aus dem gleichen Material wie das Tragelement 9 besteht, wobei der Rand 7a über die Verstärkung 7c hinaussteht. Dieser Überstand des Randes 7a korrespondiert mit einem Überstand 9a des Tragelements 9 in der Öffnung des Klappenelements 7, welche in einer Durchbrechung des Tragelements 9 liegt, so daß der Rand des Klappenelements im geschlossenen Zustand an dem Überstand 9a anstößt bzw. anschlägt. Hierdurch ist zudem eine gute Dichtigkeit des Klappenelements 7 gewährleistet

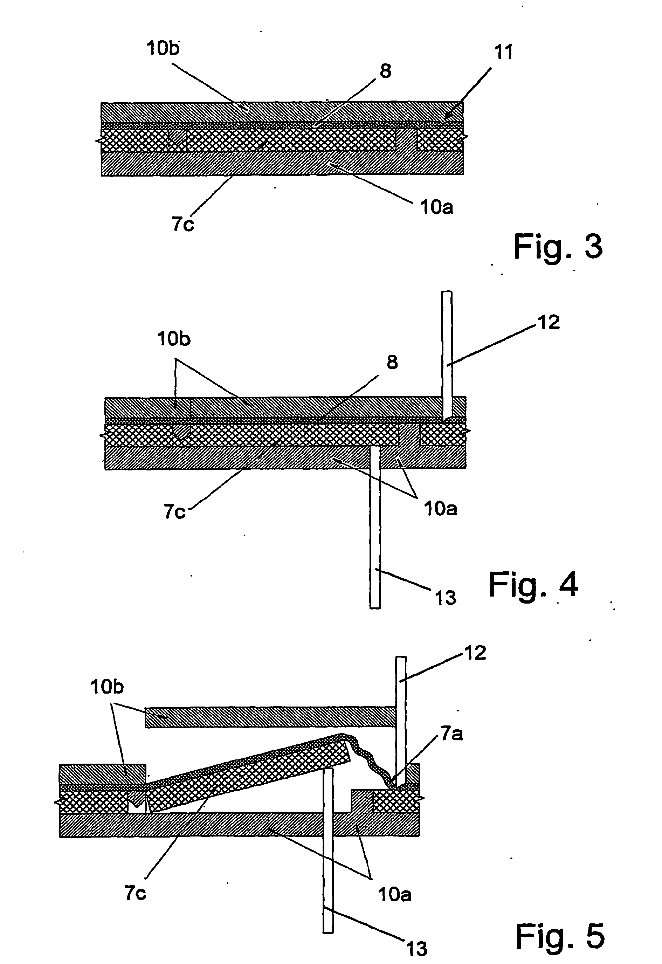

Im beschriebenen Ausführungsbeispiel ist das Tragelement 9 in einem Werkzeug bzw. eine zwei Spritzformhälften 10a, 10b umfassende Spritzform (siehe Fig. 3 bis Fig. 5) auf das Folienelement 8 aufgespritzt worden. Dabei wird Sorge getragen, daß nur solche flächigen Bereiche der Folie an dem Tragelement haften, die einer Öffnung der Klappenelelemnte nicht entgegenstehen. Dies geschieht vorliegend durch Oberflächenbehandlung des Follenetements, wobei insbesondere ein Trennmittel bzw. eine Anti-Haftschicht gezielt auf diese Bereiche aufgebracht wird.

Die zur gegenseitigen Haftung vorgesehenen Bereiche der Folie 8 gehen im Zuge des Aufspritzens des Tragelements 9 eine unmittelbare Vernetzung mit dem Material des Tragelements ein. Je nach Materialpaarung kann hierzu auch eine vorhergehende Oberflächenbehandlung der Folie, beispielsweise durch Plasma, vorgesehen sein.

Insbesondere bei Lüfterhauben mit stark gebogener Formgebung wird das Folienelement 8 vor einem Aufspritzen des Tragelements 9 durch einen thermischen Formprozeß genau an die Spritzform angepasst.

Das Material des Tragelements ist vorliegend Polyamid 66, welches einen Zusatz von Glasfasern zum Zweck der mechanischen Verstärkung beinhaltet. Das Folienmaterial kann zweckmäßig ebenfalls ein Polyamid sein. Insbesondere kann das Folienmaterial Zusatzstoffe wie etwa Weichmacher beinhalten, durch die eine hohe Flexibilität der Folie gewährleistet ist.

Die Verstärkungen 7c der Klappenelemente werden ebenfalls im Zuge des Aufspritzens auf die Folie aufgebracht. Diese Aufbringung erfolgt mittels bestimmter Spritzkanäle in ähnlicher Art wie ein Tunnelanguss. Gegebenenfalls verbleibende Stege bzw. Verbindungen der Klappenelemente 7 zum Tragelement 9 werden dann spätestens beim Öffnen der Spritzform zerstört.

Der Randbereich 7a der Klappenelemente 7 wird im allgemeinen erst beim oder nach dem Aufspritzen gebildet. Hierzu gibt es verschiedene Alternativen, von denen drei in den Fig. 3 bis Fig. 5 dargestellt sind.

Im Falle von Fig. 3 ist an einem Oberteil 10b der Spritzform eine spitz zulaufende Nase oder Scherkante 11 ausgebildet, welche hinter der eingelegten Folie liegt. Bei Einspritzen des Tragelements 9 wird ein hoher Druck auf das Follenelement 8 ausgeübt, so daß die Folie an der Scherkante durchschnitten oder zumindest eingeschnitten wird. Gegebenenfallls kann dann nach Öffnen des Werkzeugs eine manuelle oder automatische Durchtrennung der Einschneidung erfolgen, etwa durch ein Eindrücken der Klappenelemente 7.

Im Falle von Fig. 4 ist die Folie nach Aufspritzung des Tragelements 9 zunächst unversehrt. Nachfolgend fährt ein entsprechendes Scherwerkzeug 12 in die Spritzform ein und schneidet ausgehend von der dem Tragelement abgewandten Seite der Folie den Randbereich in die Folie ein. Zur Abtrennung fährt gemäß Fig. 5 zudem ein weiteres Werkzeug 13 von der anderen Seite von unten gegen die Verstärkungen 7c der Klappenelemente 7, um zugleich mit einem Öffnen des oberen Teils 10b der Spritzform die Klappenelemente 7 aufzustoßen. Bei diesem Aufstoßen reißen die Klappenelemente am Orte des Schneidwerkzeugs vom Rest der Folie ab. Je nach Auslegung und Einstellung der Werkzeuge kann dabei auch eine Längung der Folie im Randbereich 7a erfolgen. Dies ist in Fig. 5 übertrieben dargestellt. Hierdurch kann ein besonders gut abdichtender Randbereich 7a erzielt werden.

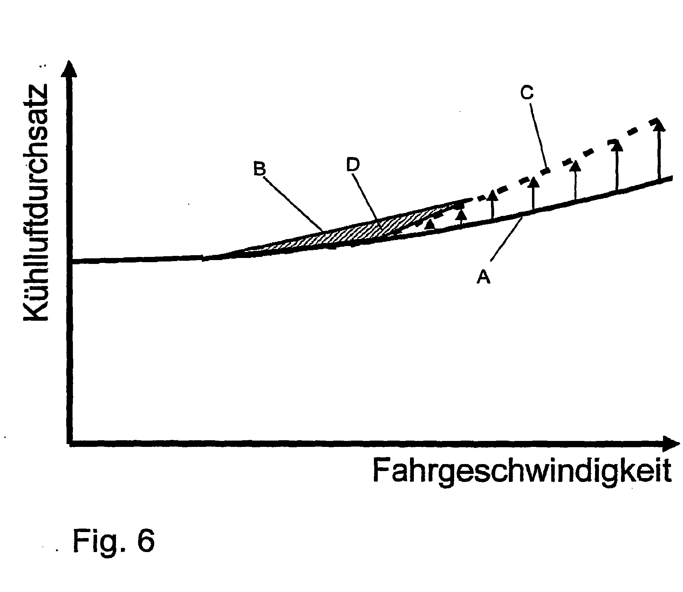

Insgesamt kann durch die erfindungsgemäße Vorrichtung ein verringerter Klappenwiderstand und somit ein verbesserter Luftdurchsatz insbesondere im unteren Geschwindigkeitsbereich erzielt werden. Zur Veranschaulichung zeigt das Diagramm gemäß Fig. 6 den Kühlluftdurchsatz über der Fahrgeschwindigkeit. Die untere, durchgezogene Linie A zeigt den tatsächlichen Luftdurchsatz ohne Staudruckklappen. Die obere, durchgezogene Linie B zeigt den Luftdurchsatz Staudruckklappen einer erfindungsgemäßen Vorrichtung. Die schraffierte Fläche kennzeichnet die Verbesserung durch die Foliendruckklappen gegenüber herkömmlichen Staudruckklappen durch einen dem Haubendruckverlauf angepasste Aufteilung. Die gestrichelte Linie C zeigt ein theoretisches Optimum des Luftdurchsatzes für konventionelle Staudruckklappen, das bei höherer Fahrgeschwindigkeit zunehmend von der Kurve A abweicht

Der schraffierte Bereich D illustriert den Abstand zwischen den Kurven B und C und betrifft somit die mögliche Verbesserung der erfindungsgemäßen Vorrichtung bzw. Klappenelemente gegenüber bekannten Staudruckklappen.

## Patentansprüche

1. Vorrichtung zur Beeinflussung oder Regulierung eines Luftstroms für ein Kraftfahfzeug, umfassend
ein flexibles Folienelement (8) mit einer Mehrzahl von Öffnungen zum Durchlaß einer Luftströmung, und
ein vorzugsweise biegesteifes Tragelement (9), an dem das Folienelement (8) gehalten ist,
wobei das Folienelement (8) eine Mehrzahl von mit den Öffnungen korrespondierenden Klappenelementen (7) aufweist, die Jeweils durch einen das Follenelement (8) durchbrechenden und das Klappanelement (7) nicht vollständig umlaufenden Klappenrand (7a) definiert sind, und wobei
das Tragelement (9) flächige Bereiche (9a) und Durchbrechungen aufweist, wobei die Durchbrechungen den Klappenelementen (7) zur Durchführung des Luftstroms zugeordnet sind und wobei das Folienelement (8) an den flächigen Bereichen (9a) flächig anliegt.

2. Vorrichtung nach Anspruch 1, **dadurch gekennzeichnet, daß** das Folienelement (8) aus einem Kunststoff, insbesondere teilaromatischen Polyamid, Polytetrafluoethylen (PTFE), Perfluoralkoxy-Copolymerisat (PFA), PVC, Polypropylen (PP) oder Polyimid (PI), besteht oder als mehrschichtige Folie mit zumindest einer Schicht/mehrerer Schichten aus beispielsweise einem der obigen Materialien, oder aus Elastomer oder aus Gewebe, beschichtetem Gewebe.

3. Vorrichtung nach Anspruch 2, **dadurch gekennzeichnet, daß** die Folie orientiert ist, wie beispielsweise gereckt ist.

4. Vorrichtung nach einem der vorhergehenden Ansprüche, **dadurch gekennzeichnet, daß** das Tragelement (9) ebenfalls aus einem Kunststoff, insbesondere durch Zusatzstoffe verstärktes Polypropylen (PP) oder Polyamid 66 (PA66), besteht.

5. Vorrichtung nach einem der vorhergehenden Ansprüche, **dadurch gekennzeichnet, daß** mindestens eines der Klappenelemente (7) mit einer Verstärkung (7c), insbesondere aus dem Material des Tragelements, hinterlegt ist.

6. Vorrichtung nach einem der vorhergehenden Ansprüche, **dadurch gekennzeichnet, daß** durch die Vorrichtung eine Lüfterhaube (2a, 2b) zur Aufnahme eines Lüfters (1) in gegenüber einem Wärmetauscher saugender Anordnung ausgebildet ist, wobei ein lüflerdominierter Betrieb eine in Schließdchtung der Klappenelemente (7) wirkende Druckdifferenz bewirkt und wobei ein fahrtwinddominierter Betrieb eine In Öffnungsrichtung der Klappenelemente (7) wirkende Druckdifferenz bewirkt.

7. Vorrichtung nach einem der vorhergehenden Ansprüche, **dadurch gekennzeichnet, daß** das Folienelement (8) mittels einer haftvermittelnden Zwischenschicht, insbesondere einem Klebstoff, oder aufgrund einer zumindest teilweise aktivierten Oberfläche mit dem Tragelement (9) verbunden ist

8. Vorrichtung nach Anspruch 7, **dadurch gekennzeichnet, daß** die Aktivierung mittels Plasma oder Beflammung vorgenommen wird.

9. Vorrichtung nach einem der vorhergehenden Ansprüche, **dadurch gekennzeichnet, daß** das Folienelement (8) Durchbrechungen aufweist, durch die Teile des Tragelements (9) das Follenelement (8) zum Zwecke der Festlegung durchgreifen.

10. Vorrichtung nach einem der vorhergehenden Ansprüche, **dadurch gekennzeichnet, daß** im Bereich ihrer flächigen Anlage (9a) eine haftende unmittelbare Verbindung der Materialien von Folienelement (8) und Tragelement (9) vorliegt.

11. Vorrichtung nach einem der vorhergehenden Ansprüche, **dadurch gekennzeichnet, daß** zumindest zwei Klappenelemente (7) eine unterschiedliche Größe aufweisen.

12. Vorrichtung nach zumindest einem der vorhergehenden Ansprüche, insbesondere nach Anspruch 11, **dadurch gekennzeichnet, daß** ein an dem einen Klappenelement auftretender Staudruck ebenfalls eine unterschiedliche Größe aufweist als ein zugleich an dem anderen Klappenelement (7) auftretender Staudruck.

13. Vorrichtung nach zumindest einem der vorhergehenden Ansprüche, **dadurch gekennzeichnet, daß** ein von den lokalen Druckverhältnissen abhängiges Öffnen bedeutet, daß zumindest einzelne Klappenelemente geöffnet sind und andere geschlossen sind.

14. Vorrichtung nach zumindest einem der vorhergehenden Ansprüche, **dadurch gekennzeichnet, daß** das Klappenelement ohne Tragstruktur ausgebildet ist.

15. Vorrichtung nach zumindest einem der vorhergehenden Ansprüche, **dadurch gekennzeichnet, daß** das Klappenetement ohne Tragstruktur nur als Folie ausgebildet ist.

16. Vorrichtung nach zumindest einem der vorhergehenden Ansprüche, **dadurch gekennzeichnet, daß** das Klappenelement eine in der Folie ausgebildete Struktur aufweist, die eine uni- oder bidirektionale Festigkeit erhöht.

17. Vorrichtung nach zumindest einem der vorhergehenden Ansprüche, **dadurch gekennzeichnet, daß** das Klappenetement im Scharnierbereich eine geschwächte biegeweiche Struktur aufweist, die beispielsweise durch Einschnitt oder Prägung erzeugbar ist.

18. Vorrichtung nach zumindest einem der vorhergehenden Ansprüche, **dadurch gekennzeichnet, daß** in oder auf der Folie Leiterbahnen oder Sensoren vorgesehen sind.

19. Vorrichtung nach zumindest einem der vorhergehenden Ansprüche, **dadurch gekennzeichnet, daß** mittels der Sensoren eine Öffnungserkennung der Klappen durchgeführt werden kann.

20. Verfahren zur Herstellung einer Vorrichtung zur Beeinflussung oder Regulierung eines Luftstroms für ein Kraftfahrzeug, umfassend
ein flexibles Folienelement (8) mit einer Mehrzahl von Öffnungen zum Durchleß einer Luftströmung, und
ein vorzugswelse biegesteifes Tragelement (9), an dem das Folienelement (8) gehalten ist,
wobei das Folienelement (8) eine Mehrzahl von mit den Öffnungen korrespondierenden Klappenelementen (7) auweist, die Jeweils durch einen das Fonenetement (8) durchbrechenden und das Klappenelement (7) nicht vollständig umlaufenden Klappenrand (7a) definiert sind, wobei
das Tragelement (9) flächige Bereiche 9a und Durchbrechungen aufweeist, wobei die Durchbrechungen den Klappenelementen (7) zur Durchführung des Luftstroms zugeordnet sind und wobei das Follenelement (8) an den flächigen Bereichen (9a) flächig anliegt,
umfassend die Schnitte;
- Herstellen eines Tragelements und von Klappen elementen,
- Herrichten des Folienelements,
- Verbinden des Folienelements mit dem Tragelement
- Verbinden des Folienelements mit den Klappenelementen.

21. Verfahren nach Anspruch 20, **dadurch gekennzeichnet, daß** vor der Verbindung von Folienelement (8) und Tragelement (9) ein Klebstoff auf zumindest eines der beiden, Folienelement (8) oder Tragelement (9), aufgebracht wird.

22. Verfahren nach Anspruch 20 oder 21, **dadurch gekennzeichnet, daß** vor der Verbindung von Folienelement (8) und Tragelement (9) eine zumindest teilweise Oberflächenbehandlung, Insbesondere eine Plasmabehandlung, zumindest eines der beiden, Folienetement (8) oder Tragelement (9), erfolgt.

23. Verfahren nach einem der Ansprüche 20 bis 22, **dadurch gekennzeichnet, daß** vor der Verbindung von Folienelement (8) und Trägelement (9) zumindest eines der beiden, Folienelement (8) oder Tragelement (9), zumindest lokal mit einer Anti-Haftschicht versehen wird, so daß an diesen stellen keine Verbindung entsteht.

24. Verfahren nach einem der Ansprüche 20 bis 23, **dadurch gekennzeichnet, daß** das Tragelement nach Einlegen des Folienelements (8) in eine Spritzform (10a, 10b) auf das Follenetementaufgespritzt wird.

25. Verfahren nach Anspruch 24, **dadurch gekennzeichnet, daß** Verstärkungen (7c) der Klappenelemente durch Anspritzen mittels Spritzkanälen nach Art eines Tunnelgusses ausgebildet werden.

26. Verfahren nach Anspruch 24 oder 25, **dadurch gekennzeichnet, daß** der Klappenrand (7a) der Klappenelemente (7) durch eine in der Spritzform (10a, 10b) ausgebildete Scherkante (11) in dem Folienelement (8) ausgebildet wird.

27. Verfahren nach Anspruch 24 oder 25, **dadurch gekennzeichnet, daß** die Klappenelemente (7) durch ein Scherwerkzeug nach dem Aufspritzen des Tragelements (9) ausgebildet werden.

28. Verfahren nach Anspruch 24 oder 25, **dadurch gekennzeichnet, daß** die Klappenelemente (7) durch Bearbeitung mit einem Laserstrahl nach dem Aufspritzen des Tragelements (9) ausgebildet werden.

29. Verfahren nach einem der Ansprüche 24 bis 28, **dadurch gekennzeichnet, daß** die Klappenelemente (7) vor einer Verbindung mit dem Tragelement (9) in dem Folienelement (8) ausgebildet werden, insbesondere mittels Stanzung.

30. Verfahren nach einem der vorhergehenden Ansprache, **dadurch gekennzeichnet, daß** das Folienelement vor dem Einbringen in das Spritzgusswerkzeug oder in dem Spritzgusswerkzeug thermogeformt wird.

## Claims

1. A device for influencing or regulating an air flow for a motor vehicle, comprising a flexible film element (8) having a plurality of openings to allow an air flow to pass through, and a preferably flexurally rigid support element (9), on which the film element (8) is held, wherein the film element (8) comprises a plurality of flap elements (7) that correspond to the openings and that are defined by a respective flap edge (7a), which penetrates the film element (8) and does not completely surround the flap element (7), and wherein the support element (9) comprises planar regions (9a) and apertures, wherein the apertures are associated with the flap elements (7) for conducting through the air flow, and wherein the film element (8) is seated against the planar regions (9a) in a planar manner.

2. The device according to claim 1, **characterized in that** the film element (8) is made of a plastic material, in particular semi-aromatic polyamide, polytetrafluoroethylene (PTFE), perfluoroalkoxy copolymer (PFA), PVC, polypropylene (PP) or polyimide (PI), or is a multi-layer film comprising at least one layer/a plurality of layers made of any one of the above materials, for example, or is made of elastomer, or woven fabric, or coated woven fabric.

3. The device according to claim 2, **characterized in that** the film is oriented.

4. A device according to any one of the preceding claims, **characterized in that** the support element (9) is likewise made of a plastic material, in particular polypropylene (PP) or polyamide 66 (PA66) reinforced with additives.

5. A device according to any one of the preceding claims, **characterized in that** at least one of the flap elements (7) has a backing in form of a reinforcement (7c), in particular made of the material of the support element.

6. A device according to any one of the preceding claims, **characterized in that** the device forms a fan cowl (2a, 2b) for receiving a fan (1) in a suction arrangement with respect to a heat exchanger, wherein a fan-dominated operation causes a pressure differential acting in the closing direction of the flap elements (7), and wherein a relative wind-dominated operation causes a pressure differential acting in the opening direction of the flap elements (7).

7. A device according to any one of the preceding claims, **characterized in that** the film element (8) is joined to the support element (9) by way of an adhesion-promoting intermediate layer, in particular an adhesive, or based on a surface that is activated at least in some regions.

8. The device according to claim 7, **characterized in that** the activation is achieved by way of plasma or flame treatment.

9. A device according to any one of the preceding claims, **characterized in that** the film element (8) comprises apertures, through which parts of the support element (9) penetrate the film element (8) for the purpose of fixation.

10. A device according to any one of the preceding claims, **characterized in that** a direct adhesive bond of the materials of the film element (8) and support element (9) exists in the region of the planar contact (9a).

11. A device according to any one of the preceding claims, **characterized in that** at least two flap elements (7) have a different size.

12. A device according to at least one of the preceding claims, in particular according to claim 11, **characterized in that** a back pressure that occurs on the one flap element likewise is different in terms of the amount than a back pressure that occurs on the other flap element (7) at the same time.

13. A device according to at least one of the preceding claims, **characterized in that** opening that is dependent on the local pressure conditions means that at least individual flap elements are open and others are closed.

14. A device according to at least one of the preceding claims, **characterized in that** the flap element is designed without a supporting structure.

15. A device according to at least one of the preceding claims, **characterized in that** the flap element without a supporting structure is only designed as a film.

16. A device according to at least one of the preceding claims, **characterized in that** the flap element has a structure that is created in the film and increases unidirectional or bidirectional strength.

17. A device according to at least one of the preceding claims, **characterized in that**, in the hinge region, the flap element has a weakened elastic structure that can be generated by a cut-out or embossing, for example.

18. A device according to at least one of the preceding claims, **characterized in that** conductors or sensors are provided in or on the film.

19. A device according to at least one of the preceding claims, **characterized in that** opening detection of the flaps can be carried out by way of the sensors.

20. A method for producing a device for influencing or regulating an air flow for a motor vehicle, comprising
a flexible film element (8) having a plurality of openings to allow an air flow to pass through, and
a preferably flexurally rigid support element (9), on which the film element (8) is held,
wherein the film element (8) comprises a plurality of flap elements (7) that correspond to the openings and that are each defined by a flap edge (7a), which penetrates the film element (8) and does not completely surround the flap element (7), wherein the support element (9) comprises planar regions (9a) and apertures, wherein the apertures are associated with the flap elements (7) for conducting through the air flow, and wherein the film element (8) is seated against the planar regions (9a) in a planar manner, comprising the following steps:
- producing a support element and flap elements;
- preparing the film element;
- joining the film element and the support element; and
- joining the film element and the flap elements.

21. The method according to claim 20, **characterized in that** an adhesive is applied to at least one of the two, these being the film element (8) or support element (9), before the film element (8) and the support element (9) are joined.

22. The method according to claim 20 or 21, **characterized in that** a surface treatment, in particular a plasma treatment, is carried out at least in some regions of at least one of the two, these being the film element (8) or support element (9), before the film element (8) and the support element (9) are joined.

23. A method according to any one of claims 20 to 22, **characterized in that** at least one of the two, these being the film element (8) or the support element (9), is provided at least locally with an anti-adhesion layer before the film element (8) and the support element (9), are joined so that no bond is created at these locations.

24. A method according to any one of claims 20 to 23, **characterized in that** the support element is molded onto the film element after the film element (8) has been placed in an injection mold (10a, 10b).

25. The method according to claim 24, **characterized in that** reinforcements (7c) of the flap elements can be created by molding them on using injection channels in the manner of a tunnel gate.

26. The method according to claim 24 or 25, **characterized in that** the flap edges (7a) of the flap elements (7) are formed in the film element (8) by shear edges (11) that are designed in the injection mold (10a, 10b).

27. The method according to claim 24 or 25, **characterized in that** the flap elements (7) are formed by a shear tool after the support element (9) has been molded on.

28. The method according to claim 24 or 25, **characterized in that** the flap elements (7) are formed by way of a machining using a laser beam after the support element (9) has been molded on.

29. A method according to any one of claims 24 to 28, **characterized in that** the flap elements (7) are formed in the film element (8), in particular by way of stamping, before the bonding to the support element (9).

30. A method according to any one of the preceding claims, **characterized in that** the film element is thermoformed in the injection mold or before being introduced into the injection mold.

## Revendications

1. Dispositif servant à influer sur un flux d'air ou à le réguler, pour un véhicule automobile, comprenant
un élément en feuille (8) flexible comportant une pluralité d'ouvertures pour le passage d'un écoulement d'air, et
un élément support (9), de préférence résistant à la flexion, élément support sur lequel est maintenu l'élément en feuille (8),
où l'élément en feuille (8) présente une pluralité d'éléments de volet (7) correspondant aux ouvertures, éléments de volet qui sont définis à chaque fois par un bord de volet (7a) traversant l'élément en feuille (8) et entourant de façon incomplète l'élément de volet (7), et
où l'élément support (9) présente des zones (9a) de grande étendue et des ouvertures, où les ouvertures sont associées aux éléments de volet (7) pour le passage du flux d'air, et où l'élément en feuille (8) s'applique à plat sur les zones (9a) de grande étendue.

2. Dispositif selon la revendication 1, **caractérisé en ce que** l'élément en feuille (8) se compose d'une matière plastique, en particulier d'un polyamide partiellement aromatique, d'un polytétrafluoroéthylène (PTFE), d'un copolymérisat de perfluoroalkoxy (PFA), de PVC, de polypropylène (PP) ou d'un polyimide (PI), ou bien est conçu comme une feuille multicouche comportant au moins une couche/plusieurs couches par exemple de l'un des matériaux cités précédemment, ou bien d'un élastomère ou d'un tissu, d'un tissu enduit.

3. Dispositif selon la revendication 2, **caractérisé en ce que** la feuille est orientée, est comme par exemple étirée.

4. Dispositif selon l'une quelconque des revendications précédentes, **caractérisé en ce que** l'élément support (9) se compose également d'une matière plastique, en particulier de polypropylène (PP) renforcé par des additifs, ou bien de polyamide 66 (PA66).

5. Dispositif selon l'une quelconque des revendications précédentes, **caractérisé en ce qu'**au moins l'un des éléments de volet (7) est doublé par un renfort (7c), en particulier réalisé dans le matériau de l'élément support.

6. Dispositif selon l'une quelconque des revendications précédentes, **caractérisé en ce qu'**un capot de ventilateur (2a, 2b), servant à loger un ventilateur (1), est conçu, à travers le dispositif, suivant un agencement fonctionnant par aspiration par rapport à un échangeur de chaleur, où un fonctionnement dominé par le ventilateur provoque une différence de pression agissant suivant la direction de fermeture des éléments de volet (7) et où un fonctionnement dominé par le vent de marche provoque une différence de pression agissant dans la direction d'ouverture des éléments de volet (7).

7. Dispositif selon l'une quelconque des revendications précédentes, **caractérisé en ce que** l'élément en feuille (8) est assemblé avec l'élément support (9) au moyen d'une couche intermédiaire ayant un pouvoir adhésif, en particulier au moyen d'une colle ou bien grâce à une surface activée au moins partiellement.

8. Dispositif selon la revendication 7, **caractérisé en ce que** l'activation est réalisée au moyen d'un plasma ou par flammage.

9. Dispositif selon l'une quelconque des revendications précédentes, **caractérisé en ce que** l'élément en feuille (8) présente des ouvertures à travers lesquelles des parties de l'élément support (9) soutiennent l'élément en feuille (8) dans le but de la fixation.

10. Dispositif selon l'une quelconque des revendications précédentes, **caractérisé en ce qu'**un assemblage adhésif, immédiat, des matériaux de l'élément en feuille (8) et de l'élément support (9) se produit dans la zone d'application (9a) de ces matériaux se faisant sur une grande étendue.

11. Dispositif selon l'une quelconque des revendications précédentes, **caractérisé en ce qu'**au moins deux éléments de volet (7) présentent une taille différente.

12. Dispositif selon au moins l'une quelconque des revendications précédentes, en particulier selon la revendication 11, **caractérisé en ce qu'**une pression dynamique se produisant au niveau de l'un des éléments de volet présente également une ampleur différente par rapport à une pression dynamique se produisant en même temps au niveau de l'autre élément de volet (7).

13. Dispositif selon au moins l'une quelconque des revendications précédentes, **caractérisé en ce qu'**une ouverture dépendant des conditions de pression locales signifie qu'au moins différents éléments de volet sont ouverts et que d'autres sont fermés.

14. Dispositif selon au moins l'une quelconque des revendications précédentes, **caractérisé en ce que** l'élément de volet est conçu sans structure support.

15. Dispositif selon au moins l'une quelconque des revendications précédentes, **caractérisé en ce que** l'élément de volet sans structure support est conçu seulement comme une feuille.

16. Dispositif selon au moins l'une quelconque des revendications précédentes, **caractérisé en ce que** l'élément de volet présente une structure configurée dans la feuille, structure qui augmente une résistance uni- ou bidirectionnelle.

17. Dispositif selon au moins l'une quelconque des revendications précédentes, **caractérisé en ce que** l'élément de volet présente, dans la zone de la charnière, une structure affaiblie, non rigide à la flexion, qui peut être produite par entaille ou par matriçage.

18. Dispositif selon au moins l'une quelconque des revendications précédentes, **caractérisé en ce qu'**il est prévu, dans ou sur la feuille, des pistes conductrices ou des capteurs.

19. Dispositif selon au moins l'une quelconque des revendications précédentes, **caractérisé en ce qu'**une détection d'ouverture des volets peut être réalisée au moyen des capteurs.

20. Procédé de fabrication d'un dispositif servant à influer sur un flux d'air ou à le réguler, pour un véhicule automobile, comprenant
un élément en feuille (8) flexible comportant une pluralité d'ouvertures pour le passage d'un écoulement d'air, et
un élément support (9), de préférence résistant à la flexion, élément support sur lequel est maintenu l'élément en feuille (8),
où l'élément en feuille (8) présente une pluralité d'éléments de volet (7) correspondant aux ouvertures, éléments de volet qui sont définis à chaque fois par un bord de volet (7a) traversant l'élément en feuille (8) et entourant de façon incomplète l'élément de volet (7), et
où l'élément support (9) présente des zones (9a) de grande étendue et des ouvertures, où les ouvertures sont associées aux éléments de volet (7) pour le passage du flux d'air, et où l'élément en feuille (8) s'applique à plat sur les zones (9a) de grande étendue,
comprenant les étapes consistant:
- à fabriquer un élément support et des éléments de volet,
- à agencer l'élément en feuille,
- à assembler l'élément en feuille avec l'élément support,
- à assembler l'élément en feuille avec les éléments de volet.

21. Procédé selon la revendication 20, **caractérisé en ce qu'**une colle est appliquée au moins sur l'un des deux éléments, à savoir l'élément en feuille (8) ou l'élément support (9), avant l'assemblage de l'élément en feuille (8) et de l'élément support (9).

22. Procédé selon la revendication 20 ou 21, **caractérisé en ce que**, avant l'assemblage de l'élément en feuille (8) et de l'élément support (9), se produit au moins partiellement un traitement de surface, en particulier un traitement au plasma, au moins de l'un des deux éléments, à savoir l'élément en feuille (8) ou l'élément support (9).

23. Procédé selon l'une quelconque des revendications 20 à 22, **caractérisé en ce que**, avant l'assemblage de l'élément en feuille (8) et de l'élément support (9), au moins l'un des deux éléments, à savoir l'élément en feuille (8) ou l'élément support (9), est doté au moins localement d'une couche anti-adhésive, de sorte qu'aucun assemblage ne se produit au niveau de ces emplacements.

24. Procédé selon l'une quelconque des revendications 20 à 23, **caractérisé en ce que** l'élément support, après l'insertion de l'élément en feuille (8) dans un moule à injection (10a, 10b), est moulé par injection sur l'élément en feuille.

25. Procédé selon la revendication 24, **caractérisé en ce que** des renforts (7c) des éléments de volet sont configurés par moulage par injection, au moyen de canaux d'injection, à la façon d'un moulage en tunnel.

26. Procédé selon la revendication 24 ou 25, **caractérisé en ce que** le bord de volet (7a) des éléments de volet (7) est configuré, dans l'élément en feuille (8), par un bord de cisaillement (11) configuré dans le moule à injection (10a, 10b).

27. Procédé selon la revendication 24 ou 25, **caractérisé en ce que** les éléments de volet (7) sont configurés, après le moulage par injection de l'élément support (9), par un outil de cisaillement.

28. Procédé selon la revendication 24 ou 25, **caractérisé en ce que** les éléments de volet (7) sont configurés, après le moulage par injection de l'élément support (9), par traitement avec un faisceau laser.

29. Procédé selon l'une quelconque des revendications 24 à 28, **caractérisé en ce que** les éléments de volet (7), avant un assemblage avec l'élément support (9), sont configurés dans l'élément en feuille (8), en particulier par découpe.

30. Procédé selon l'une quelconque des revendications précédentes, **caractérisé en ce que** l'élément en feuille est thermoformé avant l'introduction dans l'outil de moulage par injection, ou bien thermoformé dans l'outil de moulage par injection.
